# EUROPEAN PATENT APPLICATION

(11) **EP 4 832 284 A1**
(43) Date of publication of application: **28.10.2026**
(21) Application number: 25172521.4
(22) Date of filing: 25.04.2025
(51) Int. Cl.: H02H 7/12, H02H 7/26, H02H 1/00, H02H 3/20, H02H 5/04, H02H 7/00, H02H 3/087

(54) **AN ELECTRIC POWER SYSTEM AND A METHOD FOR PROTECTING THE SAME**

(71) Applicant: Danfoss A/S, 6430 Nordborg (DK)
(72) Inventor: LANA, Andrey, 00620 HELSINKI (FI); PAAKKUNAINEN, Jussi, 00620 HELSINKI (FI)
(74) Representative: Väänänen, Janne Kalervo

(57) **Abstract**

An electric power system comprises a direct voltage rail system (101) and power converters (102-106) each transferring electric energy between the direct voltage rail system and a power source or a load. Each power converter comprises a protection system (107) responsive to operation of the power converter outside a safe operating area of the power converter. Each power converter is connected to the direct voltage rail system via a protector element (108-112) for disconnecting the power converter if electric current through the protector element is outside an allowed range, and each power converter is connected to the power source or the load via a circuit breaker (113-117). The protection system of each power converter trips the circuit breaker to a non-conductive state when the operation of the power converter is outside the safe operating area. Thus, the protection system of each power converter is utilized outside the power converter, too.

## Description

### Field

The invention relates generally to protection of electric power systems against adverse phenomena such as overloads and faults e.g. short-circuits and earth-faults. More particularly, the disclosure relates to an electric power system comprising a direct voltage rail system and one or more power converters each being configured to transfer electric energy between the direct voltage rail system and a power source or a load. Furthermore, the invention relates to a method for protecting an electric power system of the kind mentioned above.

### Background

In many cases, an electric power system such as an electric or hybrid vessel power system comprises power sources such as battery systems, fuel cells, and generators, and loads such as propulsion motors, thruster motors, and distribution transformers powering an electric network of the vessel and/or other loads e.g. winches, pumps, heaters etc. In a direct voltage based electric power system, the power sources and the loads are interfaced to a direct voltage rail system by power converters each of which can be a direct voltage "DC/DC" power electronic converter or an alternating voltage - direct voltage "AC/DC" power electronic converter. In a distributed direct voltage electric power system, the power converters of the kind mentioned above are distributed and typically connected to a direct voltage rail system by cables. In such an electric power system, a protection arrangement should be able to selectively isolate faults, such as short-circuit faults as well as high impedance faults, which, if not properly isolated, could lead to overload and even damages of cablings and/or equipment of the electric power system. Furthermore, the protection arrangement should prevent false tripping of power electronic devices, circuit breakers, and isolators in healthy parts of the electric power system where voltages and/or currents may have transients having values out of normal ranges.

A review on direct voltage distribution protection challenges and technological solutions is given for example in publication Beheshtaein, S., Cuzner, R.M., Forouzesh, M., Savaghebi, M., and Guerrero, J.M., 2019. DC microgrid protection: A comprehensive review. IEEE Journal of Emerging and Selected Topics in Power Electronics, 2018. There is, however, still a need for technologies for providing reliable and selective protection in an electric power system comprising a direct voltage rail system and one or more power converters each being configured to transfer electric energy between the direct voltage rail system and a power source or a load.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments.

In accordance with the invention, there is provided a new electric power system that can be for example an electric power system of an electric or hybrid vessel.

An electric power system according to the invention comprises:
- a direct voltage rail system, and
- one or more power converters each being configured to transfer electric energy between the direct voltage rail system and a power source or a load, and each comprising a protection system responsive to operation of the power converter outside a safe operating area of the power converter.

Each of the power converters is connected to the direct voltage rail system via a protector element, e.g. a fuse, configured to disconnect the power converter from the direct voltage rail system is response to a situation in which electric current through the protector element is outside an allowed range of the electric current, and each of the power converters is connected to the power source or the load via a circuit breaker. The protection system of each of the power converters is configured to trip the respective circuit breaker to a non-conductive state in response to a situation in which the operation of the power converter is outside the safe operating area of the power converter. Thus, the protection system of each power converter is utilized not only for controlling protection actions within the power converter but also for controlling the circuit breaker which can be a distance away from the power converter, e.g. there can be a cable between the power converter and the circuit breaker.

Thus, in an electric power system according to an exemplifying and non-limiting embodiment, the protection principle can be based on coordination between fast semiconductor fuses and circuit breakers so that fault detection and isolation is based on a combination of passive protection functions, provided by fuses, and active protection functions provided by the power converters. In an electric power system according to an exemplifying and non-limiting embodiment, the circuit breakers are thermomagnetic circuit breakers, and, in this exemplifying case, the passive protection functions are provided by the fuses and thermomagnetic tripping of the circuit breakers.

In accordance with the invention, there is also provided a new method for protecting an electric power system of the kind described above. The method comprises tripping, by the protection system of each of the power converters, the respective circuit breaker to a non-conductive state in response to a situation in which the operation of the power converter is outside the safe operating area of the power converter.

Exemplifying and non-limiting embodiments are described in accompanied dependent claims.

Exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of un-recited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
Figure 1 illustrates an electric power system according to an exemplifying and non-limiting embodiment, and
Figure 2 shows a flowchart of a method according to an exemplifying and non-limiting embodiment for protecting an electric power system.

### Description of exemplifying and non-limiting embodiments

The specific examples provided in the description below should not be construed as limiting the scope and/or the applicability of the invention. Lists and groups of examples provided in the description are not exhaustive unless otherwise explicitly stated.

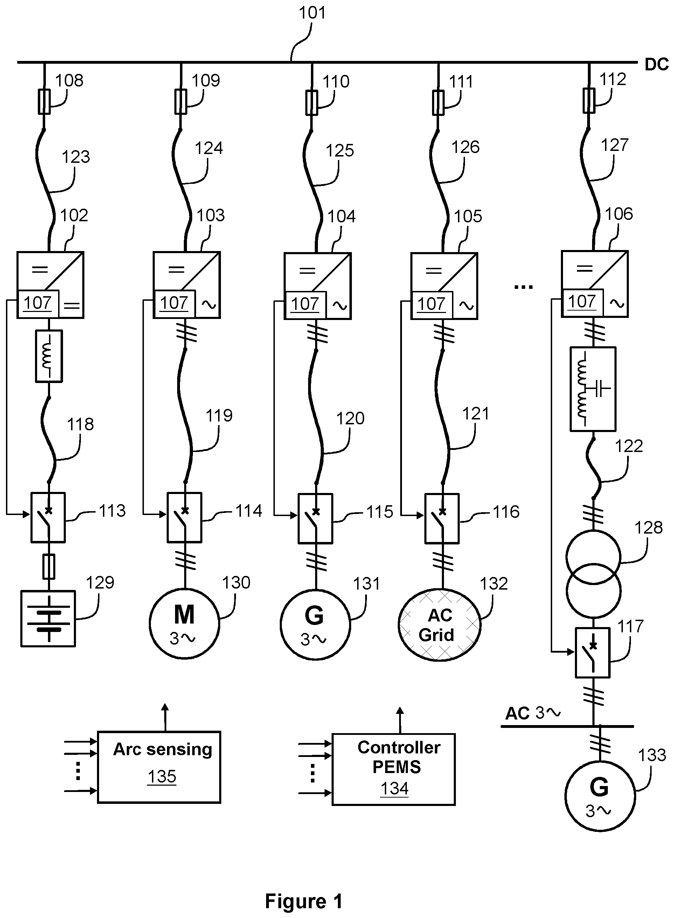

Figure 1 shows a single line diagram of an electric power system according to an exemplifying and non-limiting embodiment. The electric power system comprises a direct voltage rail system 101 and power converters each of which is configured to transfer electric energy between the direct voltage rail system 101 and a power source or a load. In figure 1, five of the power converters are denoted with references 102, 103, 104, 105, and 106, three of the power sources are denoted with references 129, 131, and 133, and two of the loads are denoted with references 130 and 132. In this exemplifying case, the power source 129 is a battery element, the power sources 131 and 133 are generators, the load 130 is a motor e.g. a propulsion or thruster motor, and the load 132 is an alternating voltage grid. The battery element can also act as a load when being charged.

Each of the power converters comprises a protection system that is responsive to operation of the power converter when the operation is outside a safe operating area of the power converter under consideration. In figure 1, the protection systems of the power converters are denoted with a reference 107. A situation where operation of a power converter is outside a safe operating area and which causes a reaction by the protection system may include for example one or more of the following: i) an over current situation in which electric current at a first terminal of the power converter facing towards the direct voltage rail system 101 exceeds a first overcurrent limit, ii) an overcurrent situation in which electric current at a second terminal of the power converter facing towards the power source or the load exceeds a second overcurrent limit, iii) an over- or undervoltage situation in which voltage at the first terminal of the power converter exceeds a first overvoltage limit or is below a first undervoltage limit, iv) an over- or undervoltage situation in which voltage at the second terminal of the power converter exceeds a second overvoltage limit or is below a second undervoltage limit, v) an overheating situation in which temperature measured from the power converter or from another element of the electric power system exceeds an overtemperature limit. Furthermore, a situation where operation of the power converter is outside the safe operating area and which causes a reaction by the protection system 107 may include an overcurrent situation in which a joule integral of electric current exceeds a I²t-limit, where the joule integral is a time integral of the square of the electric current. Therefore, the invention is not limited to any specific functionality of the protection systems 107 of the power converters.

Each of the power converters 102-106 is connected to the direct voltage rail system 101 via a protector element configured to disconnect the power converter under consideration from the direct voltage rail system 101 is response to a situation in which electric current through the protector element is outside an allowed range of the electric current, e.g. so that the electric current exceeds a limit expressed in amperes and/or a joule integral of electric current exceeds a limit. In figure 1, five of the protector elements are denoted with references 108, 109, 110, 111, and 112.

The protector elements can be for example fuses, such as highspeed aR fuses, suitable for protecting semiconductors. In the exemplifying electric power system illustrated in figure 1, the protector elements 108-112 are directly connected to the direct voltage rail system 101 and the power converters are connected to the protector elements 108-112 with cables 123, 124, 125, 126, and 127. Thus, the power converters 102-108 do not need to be in the vicinity of the direct voltage rail system 101 but the power converters can be distances away from the direct voltage rail system 101 and from each other.

Each of the power converters 102-106 is connected to the respective power source or load via a circuit breaker. In figure 1, five of the circuit breakers are denoted with references 113, 114, 115, 116, and 117. In the exemplifying electric power system illustrated in figure 1, the power converters 102-106 are connected to the circuit breakers 113-117 via cables 118, 119, 120, 121, and 122. Furthermore, it is also possible that there are other electric elements between the power converters 102-106 and the circuit breakers 113-117. The exemplifying electric power system illustrated in figure 1 comprises a transformer 128 between the power converter 106 and the circuit breaker 117. The circuit breakers 113-117 can be for example thermomagnetic breakers each configured to sense electric current through the circuit breaker, to receive a temperature signal expressing a measured temperature, and to switch to the non-conductive state in accordance with a thermomagnetic tripping curve, e.g. in response to a situation in which the temperature signal is indicative of overheating and/or the electric current through the circuit breaker is outside an allowed range of the electric current e.g. so that the electric current exceeds a predetermined limit or a joule integral of the electric current exceeds a predetermined limit.

The protection systems 107 of the power converters are communicatively connected to the circuit breakers 113-117 so that the protection system of each of the power converters is configured to trip the respective circuit breaker to a non-conductive state in response to a situation in which the operation of the power converter under consideration is outside the safe operating area of the power converter. Thus, the protection system of each power converter is utilized not only for controlling protection actions within the power converter itself but also for controlling the circuit breaker via which the power converter is connected to the power source or load.

An electric power system according to an exemplifying and non-limiting embodiment comprises a controller 134 configured to constitute a power and energy management system "PEMS" that monitors a power balance between the power sources and the loads based on e.g. measured electric currents and voltages of the sources and the loads. The PEMS is communicatively connected to the protection systems 107 of the power converters 102-106. The protection system of each of the power converters 102-106 can be configured to deactivate the power converter under consideration and to trip the respective circuit breaker to the non-conductive state in response to a situation in which there is a power unbalance between the power sources and the loads.

An electric power system according to an exemplifying and non-limiting embodiment comprises an arc sensing system 135 that can be based on one or more light sensors and/or one or more pressure sensors. The arc sensing system 134 is communicatively connected to the protection systems 107 of the power converters 102-106. The protection system of each of the power converters can be configured to deactivate the power converter and to trip the respective circuit breaker to a non-conductive state in response to a detection of an arc.

The implementation of the controller 134 as well as the implementation of control means of the arc sensing system 135 can be based on one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the controller 134 and/or the arc sensing system 135 may comprise one or more memory circuits each of which can be for example a random-access memory "RAM" circuit.

Exemplifying fault situations and protection functionalities responsive to these fault situations are presented below:
Example 1. A low impedance fault in e.g. the cable 123 or a short-circuit fault in e.g. the power converter 102:
   - The protector element 108, e.g. a highspeed aR fuse, is blown and isolates the fault from the direct voltage rail system 101 in a short time e.g. less than 5 ms, the power converter 102 feeds short-circuit current to the fault, and depending on the short-circuit current level: i) fuse status indication is transferred, in e.g. 100 ms, to the power converter 102, and the power converter 102 trips the circuit breaker 113 in e.g. 20-60 ms, or ii) a thermomagnetic unit of the circuit breaker 113 trips according to a thermomagnetic tripping curve in e.g. 20 ms, or iii) the protection system of the power converter 102 trips the circuit breaker 113 in e.g. 20-60 ms.
Example 2. A high impedance fault in e.g. the cable 123 where fault current is insufficient to blow the protector element 108, e.g. a highspeed aR fuse:
   - The arc sensing system 134 informs the protection systems of the power converters and the power converters are deactivated. If the fault current is still being feed, the power converter 102 trips the circuit breaker 113 in e.g. 20-60 ms. If the fault still continues, the PEMS reports significant mismatch between power generation and load, and all power converters are deactivated, and each power converter trips the respective circuit breaker in e.g. 20-60 ms.
Example 3. Deactivation of e.g. the power converter 103 when the electric motor 130 is operated in a field-weakening region:
   - the electric motor 130 runs at high speed, causing overvoltage on machine alternating voltage terminals, and the power converter 103 is feeding direct current via free-wheeling diodes of controllable power electronic switches e.g. insulated gate bipolar transistors "IGBT". If a system response is slow and load is non-sufficient, voltage may rise to overvoltage conditions damaging other equipment of the electric power system and/or overload the controllable power electronic switches of the power converter 103. The power converter 103 detects the high voltage at its alternating voltage terminals, and the power converter 103 trips the circuit breaker 114 in e.g. 20-60 ms and thereby isolates the electric motor 130.
Example 4. A low impedance fault in e.g. the cable 118:
   - A thermomagnetic unit of the circuit breaker 113 trips according to a thermomagnetic tripping curve in e.g. 20 ms, or if this does not take place, the power converter 103 detects fault conditions and trips the circuit breaker 113 in e.g. 20-60 ms.

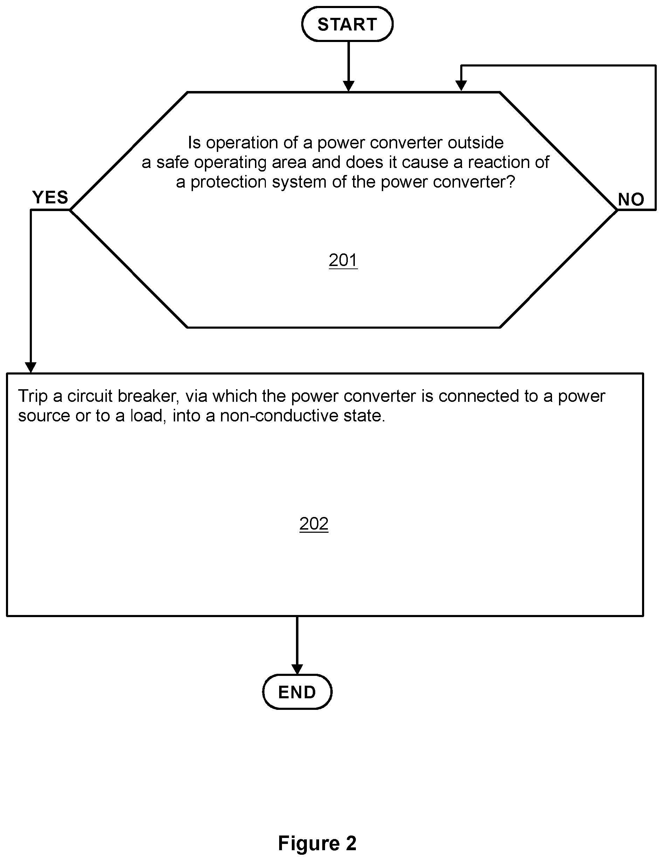

Figure 2 shows a flowchart of a method according to an exemplifying and non-limiting embodiment for protecting an electric power system that comprises:
- direct voltage rail system, and
- one or more power converters each being configured to transfer electric energy between the direct voltage rail system and a power source or a load, and each comprising a protection system responsive to operation of the power converter outside a safe operating area of the power converter,
wherein each of the power converters is connected to the direct voltage rail system via a protector element, e.g. an aR type fuse, configured to disconnect the power converter from the direct voltage rail system is response to a situation in which electric current through the protector element is outside an allowed range of the electric current, and wherein each of the power converters is connected to the power source or the load via a circuit breaker.

The method comprises tripping 202, by the protection system of each of the power converters, the respective circuit breaker to a non-conductive state in response to a situation 201 in which the operation of the power converter under consideration is outside the safe operating area of the power converter.

In a method according to an exemplifying and non-limiting embodiment, the situation in which the operation of the power converter is outside the safe operating area includes at least one of the following: i) a situation in which electric current at a first terminal of the power converter facing towards the direct voltage rail system exceeds a first overcurrent limit, ii) a situation in which electric current at a second terminal of the power converter facing towards the power source or the load exceeds a second overcurrent limit, iii) a situation in which voltage at the first terminal of the power converter exceeds a first overvoltage limit or is below a first undervoltage limit, iv) a situation in which voltage at the second terminal of the power converter exceeds a second overvoltage limit or is below a second undervoltage limit, v) a situation in which temperature measured from the power converter or from another element of the electric power system exceeds an overtemperature limit.

A method according to an exemplifying and non-limiting embodiment comprises monitoring a power balance between the power sources and the loads, and the protection system of each of the power converters deactivates the power converter and trips the respective circuit breaker to a non-conductive state in response to a situation in which there is a power unbalance between the power sources and the loads.

A method according to an exemplifying and non-limiting embodiment comprises arc sensing within the electric power system, and the protection system of each of the power converters deactivates the power converter and trips the respective circuit breaker to a non-conductive state in response to a detection of an arc.

In a method according to an exemplifying and non-limiting embodiment, each circuit breaker is configured to sense electric current through the circuit breaker and to trip itself to the non-conductive state in response to a situation in which the electric current through the circuit breaker is outside an allowed range of the electric current. The circuit breaker can be for example a thermomagnetic circuit breaker.

In a method according to an exemplifying and non-limiting embodiment, the electric power system comprises a cable between at least one of the power converters and the respective circuit breaker.

In a method according to an exemplifying and non-limiting embodiment, the electric power system comprises a cable between direct voltage rail system and each of the power converters.

In a method according to an exemplifying and non-limiting embodiment, each protector element is between the direct voltage rail system and the respective cable between the direct voltage rail system and the respective power converter.

In a method according to an exemplifying and non-limiting embodiment, the electric power system comprises a transformer between at least one of the power converters and the respective circuit breaker.

The specific examples provided in the description given above should not be construed as limiting the scope and/or the applicability of the invention. Lists and groups of examples provided in the description given above are not exhaustive unless otherwise explicitly stated.

## Claims

1. An electric power system comprising:
- a direct voltage rail system (101), and
- one or more power converters (102-106) each being configured to transfer electric energy between the direct voltage rail system and a power source or a load (129-133), and each comprising a protection system (107) responsive to operation of the power converter outside a safe operating area of the power converter,
wherein each of the power converters is connected to the direct voltage rail system via a protector element (108-112) configured to disconnect the power converter from the direct voltage rail system is response to a situation in which electric current through the protector element is outside an allowed range of the electric current, and wherein each of the power converters is connected to the power source or the load via a circuit breaker (113-117), **characterized in that** the protection system of each of the power converters is configured to trip the respective circuit breaker to a non-conductive state in response to a situation in which the operation of the power converter is outside the safe operating area of the power converter.

2. An electric power system according to claim 1, wherein the electric power system comprises a cable (118-122) between at least one of the power converters and the respective circuit breaker.

3. An electric power system according to claim 1 or 2, wherein the electric power system comprises a cable (123-127) between direct voltage rail system and each of the power converters.

4. An electric power system according to claim 3, wherein the protector element (108-112) is between the direct voltage rail system and the cable (123-127) between the direct voltage rail system and the respective power converter.

5. An electric power system according to any one of claims 1-4, wherein the electric power system comprises a transformer (128) between at least one of the power converters and the respective circuit breaker.

6. An electric power system according to any one of claims 1-5, wherein the protector element (108-112) is a fuse.

7. An electric power system according to claim 6, wherein the fuse is an aR fuse suitable for protecting semiconductors.

8. An electric power system according to any one of claims 1-7, wherein the situation in which the operation of the power converter is outside the safe operating area includes at least one of following: i) a situation in which electric current at a first terminal of the power converter facing towards the direct voltage rail system exceeds a first overcurrent limit, ii) a situation in which electric current at a second terminal of the power converter facing towards the power source or the load exceeds a second overcurrent limit, iii) a situation in which voltage at the first terminal of the power converter exceeds a first overvoltage limit or is below a first undervoltage limit, iv) a situation in which voltage at the second terminal of the power converter exceeds a second overvoltage limit or is below a second undervoltage limit, v) a situation in which temperature measured from the power converter or another element of the electric power system exceeds an overtemperature limit.

9. An electric power system according to any one of claims 1-8, wherein the electric power system comprises a controller (134) configured to monitor a power balance between power sources and loads, and the protection system of each of the power converters is configured to deactivate the power converter and to trip the respective circuit breaker to a non-conductive state in response to a situation in which there is a power unbalance between the power sources and the loads.

10. An electric power system according to any one of claims 1-9, wherein the electric power system comprises an arc sensing system (135), and the protection system of each of the power converters is configured to deactivate the power converter and to trip the respective circuit breaker to a non-conductive state in response to a detection of an arc.

11. An electric power system according to any one of claims 1-10, wherein the circuit breaker is configured to sense electric current through the circuit breaker and to change to the non-conductive state in response to a situation in which the electric current through the circuit breaker is outside an allowed range of the electric current of the circuit breaker.

12. A method for protecting an electric power system that comprises
- a direct voltage rail system (101), and
- one or more power converters (102-106) each being configured to transfer electric energy between the direct voltage rail system and a power source or a load (129-133), and each comprising a protection system (107) responsive to operation of the power converter outside a safe operating area of the power converter,
wherein each of the power converters is connected to the direct voltage rail system via a protector element (108-112) configured to disconnect the power converter from the direct voltage rail system is response to a situation in which electric current through the protector element is outside an allowed range of the electric current, and wherein each of the power converters is connected to the power source or the load via a circuit breaker (113-117), **characterized in that** the method comprises tripping (202), by the protection system of each of the power converters, the respective circuit breaker to a non-conductive state in response to a situation (201) in which the operation of the power converter is outside the safe operating area of the power converter.

13. A method according to claim 12, wherein the situation in which the operation of the power converter is outside the safe operating area includes at least one of following: i) a situation in which electric current at a first terminal of the power converter facing towards the direct voltage rail system exceeds a first overcurrent limit, ii) a situation in which electric current at a second terminal of the power converter facing towards the power source or the load exceeds a second overcurrent limit, iii) a situation in which voltage at the first terminal of the power converter exceeds a first overvoltage limit or is below a first undervoltage limit, iv) a situation in which voltage at the second terminal of the power converter exceeds a second overvoltage limit or is below a second undervoltage limit, v) a situation in which temperature measured from the power converter or another element of the electric power system exceeds an overtemperature limit.

14. A method according to claim 12 or 13, wherein the method comprises monitoring a power balance between the power sources and loads, and the protection system of each of the power converters deactivates the power converter and trips the respective circuit breaker to a non-conductive state in response to a situation in which there is power unbalance between the power sources and the loads.

15. A method according to any one of claims 12-14, wherein the method comprises arc sensing within the electric power system, and the protection system of each of the power converters deactivates the power converter and trips the respective circuit breaker to a non-conductive state in response to a detection of an arc.
